# EUROPÄISCHE PATENTSCHRIFT

(11) **EP 0 379 867 B1**
(45) Veröffentlichungstag und Bekanntmachung des Hinweises auf die Patenterteilung: **08.12.1993**
(21) Anmeldenummer: 90100190.9
(22) Anmeldetag: 05.01.1990
(51) Int. Cl.: A01N 25/26

(54) **Flüssige und feste Wirkstoffe enthaltende Trägergranulate**
Carrier granulates containing liquid and solid active agents
Granulés de support contenant des substances actives liquides et solides

(30) Priorität: 18.01.1989 DE 3901274
(43) Veröffentlichungstag der Anmeldung: 01.08.1990
(73) Patentinhaber: BAYER AG, 51368 Leverkusen (DE)
(72) Erfinder: Antfang, Elmar, Dr., D-4019 Monheim (DE); Kerimis, Dimitrios, Dr., D-5000 Köln 71 (DE); Singer, Rolf-Jürgen, Dr., D-5600 Wuppertal 1 (DE)

(56) Entgegenhaltungen:
- EP-A- 0 016 278
- EP-A- 0 192 118
- EP-A- 0 230 601
- US-A- 3 137 618

## Beschreibung

Die vorliegende Erfindung betrifft neue, flüssige und feste Wirkstoffe enthaltende Trägergranulate (sogenannte "Kombinationsträgergranulate"). Als Wirkstoffe werden erfindungsgemäß vorzugsweise die aktiven Komponenten des Pflanzenschutzgebiets verstanden, wie Insektizide, Nematizide, Akarizide, Fungizide, Herbizide und Wachstumsregulatoren.

Die Erfindung betrifft weiterhin ein Verfahren zur Herstellung der neuen Kombinationsträgergranulate sowie deren Verwendung zur Bekämpfung von Schädlingen, vorzugsweise im Landwirtschafts- und Gartenbereich.

Es sind bereits zahlreiche Trägergranulate bekannt, die feste oder flüssige biozide Wirkstoffe auf einem körnigen Trägermaterial enthalten (vgl. Büchel, "Pflanzenschutz und Schädlingsbekämpfung", Georg-Thieme-Verlag, Stuttgart, 1977, Seiten 198 und 199).

So lassen sich Trägergranulate mit festen Wirkstoffen zum Beispiel dadurch herstellen, daß man die aktiven Komponenten gegebenenfalls im Gemisch mit Zusatzstoffen in feinverteilter Form mit Hilfe von diversen Klebemitteln auf der kompakten bzw. nicht absorptiven Oberfläche des Trägermaterials fixiert.

Trägergranulate, die flüssige biozide Wirkstoffe enthalten, lassen sich zum Beispiel dadurch zubereiten, daß man poröse oder absorptive Trägermaterialien mit flüssigen Wirkstoffen oder mit Lösungen flüssiger Wirkstoffe in geeigneten Solventien, jeweils gegebenenfalls im Gemisch mit Zusatzstoffen, tränkt. Nach diesem Verfahren lassen sich Trägergranulate nur dann herstellen, wenn ein geeignetes Solvens zur Lösung des festen Wirkstoffanteils existiert. Neben dieser Einschränkung sind die Eigenschaften dieser Granulate aber nicht immer befriedigend. Wegen der geringen Härte der absortiven Granulate können diese unter Beanspruchung physikalischer Kräfte abreiben und so biozidhaltigen Staub freisetzen.

Es wurden nun neue, flüssige und feste Wirkstoffe enthaltende Trägergranulate gefunden, die
a) körniges Trägermaterial mit nicht-absorptiver Oberfläche,
b) mindestens einen flüssigen neben einem festen Wirkstoff,
c) als Bindemittel mindestens einen Kleber auf Polyurethanbasis, gegebenenfalls im Gemisch mit einem weiteren Kleber auf Basis eines der folgenden Systeme:
   Polyvinylacetat, Polyvinylpyrrolidon, Polyvinylalkohol, Copolymerisate aus Vinylacetat/Maleinsäure-di-n-butylester, Acrylsäureester, Vinylacetat/Ethylen, Vinylacetat/Ethylen/Vinylchlorid, Vinylacetat/Acrylsäureester, Vinylacetat/Vinylester, Styrol/Acrylsäureester sowie
d) gegebenenfalls Zusatzstoffe enthalten.

Weiterhin wurde gefunden, daß sich die erfindungsgemäßen Kombinationsträgergranulate dadurch herstellen lassen, daß man
- -: körniges Trägermaterial mit nicht-absorptiver Oberfläche in einem Mischer mit einer wäßrigen Dispersion eines Polyurethan-Klebers, gegebenenfalls unter Zusatz eines Verdickungsmittels und gegebenenfalls im Gemisch mit einer wäßrigen Dispersion eines weiteren Klebers auf Basis einer der folgenden Systeme:
Polyvinylacetat, Polyvinylpyrrolidon, Polyvinylalkohol, Copolymerisate aus Vinylacetat/Maleinsäure-di-n-butylester, Acrylsäureester, Vinylacetat/Ethylen, Vinylacetat/Ethylen/Vinylchlorid, Vinylacetat/Acrylsäureester, Vinylacetat/Vinylester, Styrol/Acrylsäureester besprüht, dann mit einer den flüssigen Wirkstoff enthaltenden Vormischung und einer den festen Wirkstoff und gegebenenfalls Streckmittel enthaltenden Mischung versetzt, gegebenenfalls nochmals mit einer wäßrigen Dispersion eines Polyurethan-Klebers, gegebenenfalls im Gemisch mit einer wäßrigen Dispersion eines weiteren Klebers auf Basis der oben genannten Systeme besprüht und die so erhaltenen körnigen Produkte trocknet.

Schließlich wurde gefunden, daß sich die erfindungsgemäßen Kombinationsträgergranulate je nach den enthaltenen Wirkstoffen für verschiedenste Zwecke in der Landwirtschaft und im Gartenbau verwenden lassen.

Es ist als äußerst überraschend zu bezeichnen, daß die erfindungsgemäßen Kombinationsträgergranulate eine bessere Wirksamkeit zeigen als vorbekannte Granulate, bei denen flüssige oder Kombinationen aus flüssigen und festen Wirkstoffen in Form einer Lösung auf poröse oder absorptive Trägermaterialien aufgezogen sind Weiter ist es von Vorteil, daß die als Klebemittel verwendeten Polyurethanverbindungen unter Umweltbedingungen leicht abgebaut werden und den Wirkstoff freigeben, wobei sie aber den Wirkstoff bis zur Freisetzung vor chemischen Einflüssen schützen.

Die erfindungsgemäßen Kombinationsträgergranulate zeichnen sich durch eine Reihe von Vorteilen aus. Für die Kombinationsträgergranulate ergibt sich der Vorteil einer gemeinsamen Ausbringung von festen und flüssigen bioziden Wirkstoffen.

Ferner werden die in diesen Granulaten enthaltenen Wirkstoffe in der jeweils gewünschten Weise an ihrem Einsatzort freigesetzt. Darüberhinaus handelt es sich bei den erfindungsgemäßen Kombinationsträgergranulaten um Produkte, die sich durch eine extrem hohe Abreibfestigkeit auszeichnen.

Die erfindungsgemäßen Produkte werden im vorliegenden Fall als Kombinationsträgergranulate bezeichnet, wobei das Kombinationsträgergranulat mindestens einen flüssigen Wirkstoff, der auch in Form von Mikrokapseln vorliegen kann, und einen festen Wirkstoff enthält.

Als Trägermaterialien mit nicht absorptiver Oberfläche können in den erfindungsgemäßen Kombinationsträgergranulaten alle üblichen, in derartigen Granulaten enthaltenen Trägerstoffe mit nicht absorptiver Oberfläche eingesetzt werden. Vorzugsweise in Betracht kommen Calcit, Dolomit und Sand, wie z.B. Quarzsand.

Der mittlere Teilchendurchmesser der Trägermaterialien kann innerhalb eines bestimmten Bereiches variiert werden. Im allgemeinen liegt der mittlere Teilchendurchmesser zwischen 0,1 und 3,0 mm, vorzugsweise zwischen 0,3 und 1 mm.

Unter aktiven Wirkstoffkomponenten sind, wie bereits oben erwähnt, im vorliegenden Fall alle üblicherweise im Pflanzenschutz verwendbaren Wirkstoffe zu verstehen. Hierzu gehören vorzugsweise Insektizide, Nematizide, Akarizide, Fungizide, Herbizide und Wachstumsregulatoren.

Die erfindungsgemäßen Granulate enthalten mindestens einen bei Raumtemperatur flüssigen Wirkstoff und einen bei Raumtemperatur festen Wirkstoff.

Als bei Raumtemperatur feste Wirkstoffe kommen vorzugsweise Carbamate, Nitromethylene, Nitroimino-Derivate, Pyrethroide, Phenylpyrazole in Frage. Beispielhaft seien genannt:
2-Isopropoxy-phenyl-N-methyl-carbamat,
2,3-Dihydro-2,2-dimethyl-7-benzofuranyl-N-methyl-carbamat,
(3,5-Dimethyl-4-methylthio-phenyl)-N-methyl-carbamat,
2-(1-methylethyl)phenylmethylcarbamat,
1-(2-Chlor-5-pyridinyl-methyl)2-nitroiminoimidazolidin.

Als bei Raumtemperatur flüssige biozide Wirkstoffe kommen vorzugsweise Phosphorsäure-Derivate in Betracht. Beispielhaft genannt seien:
O-Ethyl-O-(2-isopropyloxycarbonyl-phenyl)-W-isopropylthionophosphorsäureesteramid,
O,O-Diethyl-α-cyanobenzylideneamino-oxyphosphonothioate,
O,O-Diemethyl-O-(4-methylmercapto-3-methyl-phenyl)-thionophosphorsäureester,
O-Ethyl-O-(4-methylthio-phenyl)-S-propyl-dithiophosphat,
(O,O-Diethyl-thionophosphoryl)-α-oximinophenylessigsäurenitril,
O,O-Diethyl-O-(3-Chlor-4-methyl-7-cumarinyl)-thiophosphat,
5-[1,2-Bis-(ethoxycarbonyl)-ethyl]-O,O-dimethyl-dithiophosphorsäureester.

Als Bindemittel fungiert in den erfindungsgemäßen Kombinationsträgergranulaten ein Kleber auf Polyurethan-Basis, gegebenenfalls im Gemisch mit einem weiteren Kleber auf Basis eines der folgenden Systeme:
Polyvinylacetat, Polyvinylpyrrolidon, Polyvinylalkohol sowie mit Copolymerisaten aus Vinylacetat/Maleinsäure-di-n-butylester, Acrylsäureester, Vinylacetat/Ethylen, Vinylacetat/Ethylen/Vinylchlorid. Vinylacetat/Acrylsäureester, Vinylacetat/Vinylester, Styrol/Acrylsäureester.

Als Zusatzstoffe, die in den erfindungsgemäßen Kombinationsträgergranulaten vorhanden sein können, kommen Streckmittel, Mahlhilfsmittel, Farbstoffe sowie Wasser und organische Solventien in Frage.

Hierbei kommen als Streckmittel vorzugsweise feinkörnige anorganische Feststoffe in Frage, wie natürliche Gesteinsmehle, z.B. Kaolin, Tonerden, Talkum, Kreide, Quarzpulver, Attapulgit, Montmorillonit, Sepiolith, Zeolith, Bentonit, ferner synthetische Gesteinsmehle wie hochdisperse Kieselsäuren.

Als Mahlhilfsmittel kommen alle üblichen, für diesen Zweck verwendbaren Stoffe in Betracht. Vorzugsweise genannt seien Kaolin, Tonerden, Talkum, Kreide und Quarzpulver.

Als Farbstoffe, die als Zusatzstoffe in Betracht kommen, seien anorganische Pigmente wie Eisenoxid, Titandioxid, Ferrocyanoblau und organische Farbstoffe wie Anthrachinon-, Azo- und Metallphthalacyaninfarbstoffe genannt.

Als organische Solventien kommen alle üblicherweise für die Herstellung von Trägergranulaten verwendbaren organischen Solventien in Frage. Vorzugsweise in Betracht kommen niedrig siedende organische Solventien wie Methanol Ethanol, Butanol und Methylenchlorid.

Die erfindungsgemäßen Granulate bestehen aus körnigen Trägermaterialien, auf deren nicht absorptiver Oberfläche sich eine umhüllende Schicht befindet, die mindestens einen flüssigen bioziden Wirkstoff und einen festen bioziden Wirkstoff enthält. Als Bindemittel wirkt Polyurethan und Gemische aus Polyurethan und Polyvinylacetat, Polyvinylpyrollidon, Polyvinylalkohol, sowie Mischungen mit Copolymerisaten aus Vinylacetat/Maleinsäure-di-n-butylester, Acrylsäureester, Vinylacetat/Ethylen, Vinylacetat/Ethylen/Vinylchlorid, Vinylacetat/Acrylsäureester, Vinylacetat/Vinylester, Styrol/Acrylsäureester, die gegebenenfalls Zusatzstoffe enthalten können. Die in der umhüllenden Schicht vorhandenen Komponenten können zum Teil auch in Einbuchtungen im Trägermaterial eindringen.

In den erfindungsgemäßen Kombinationsträgergranulaten können die prozentualen Anteile der enthaltenen Komponenten innerhalb größerer Bereiche variiert werden Der Anteil an körnigem Trägermaterial liegt im allgemeinen zwischen 50 und 99,5 Gew.-%., vorzugsweise zwischen 60 und 92 Gew.-%. Der Anteil an flüssigen wie auch an festen bioziden Wirkstoffen beträgt im allgemeinen zwischen 0,1 und 20 Gew.-%., vorzugsweise zwischen 0,5 und 15 Gew.-%.

Der Anteil an dem als Bindemittel fungierendem Polyurethan und Gemische aus Polyurethan und Polyvinylacetat, Polyvinylpyrollidon, Polyvinylalkohol, sowie Mischungen mit Copolymerisaten aus Vinylacetat/Maleinsäure-di-n-butylester, Acrylsäureester, Vinylacetat/Ethylen, Vinylacetat/Ethylen/Vinylchlorid, Vinylacetat/Acrylsäureester, Vinylacetat/Vinylester, Styrol/Acrylsäureester, liegt im allgemeinen zwischen 0,1 und 4 Gew.-%, vorzugsweise zwischen 0,3 und 3 Gew.-%, wobei auf 1 Teil Polyurethan im allgemeinen 0,05 bis 0,49 Gewichtsteile, vorzugsweise 0,1 bis 0,2 Gewichtsteile an Polyvinylacetat, Polyvinylpyrrolidon, Polyvinylalkohol sowie Anteile der oben aufgeführten Copolymerisate entfallen. Zusatzstoffe sind gegebenenfalls in Anteilen von 1 bis 40 Gewichtsteilen, vorzugsweise von 2 bis 30 Gewichtsteilen, enthalten.

Bei der Herstellung der erfindungsgemäßen Kombinationsträgergranulate werden vorzugsweise alle diejenigen Komponenten verwendet, die bereits im Zusammenhang mit der Beschreibung der erfindungsgemäßen Kombinationsträgergranulate vorzugsweise genannt wurden.

Bei der Herstellung der erfindungsgemäßen Granulate ist es erforderlich, die festen bioziden Wirkstoffe in feinverteilter Form einzusetzen. Dazu werden die bei Raumtemperatur festen bioziden Wirkstoffe im allgemeinen gegebenenfalls im Gemisch mit Mahlhilfsmitteln in fein gemahlenem Zustand verwendet. Die bei Raumtemperatur flüssigen bioziden Wirkstoffe werden im allgemeinen im Gemisch mit Streckmitteln wie Attapulgit, Montmorillonit, Sepiolith oder hochdisperser Kieselsäure verwendet. Für die Kombinations-Trägergranulate ist es jedoch auch möglich, ein Gemisch aus flüssigen und festen bioziden Wirkstoffen, gegebenenfalls im Gemisch mit Mahlhilfsmitteln, in fein verteiltem Zustand einzusetzen.

Das als Bindemittel (Kleber) fungierende Polyurethan oder das Gemisch aus Polyurethan und denjenigen Komponenten, die bereits im Zusammenhang mit der Beschreibung der erfindungsgemäßen Kombinationsträgergranulate vorzugsweise genannt wurden, wird, wie bereits oben angegeben, als wäßrige Dispersion eingesetzt. Als Verdünnungsmittel kommen hierbei neben Wasser auch organische Substanzen in Frage, vorzugsweise niedrig siedende organische Lösungsmittel, wie Methanol, Ethanol, Butanol und 1,2-Dichlormethan.

Bei der Durchführung des erfindungsgemäßen Verfahrens geht man im allgemeinen so vor, daß man
- körniges Trägermaterial mit nicht absorptiver Oberfläche in einen Mischer gibt und unter ständigem Mischen mit einer wäßrigen Dispersion aus Polyurethan oder einem Gemisch aus Polyurethan und denjenigen Komponenten, die bereits im Zusammenhang mit der Beschreibung der erfindungsgemäßen Kombinationsträgergranulate genannt wurden, besprüht,
- dann mit mindestens einem festen bioziden, gegebenenfalls im Gemisch mit Zusatzstoffen, und mit mindestens einem flüssigen bioziden Wirkstoff, gegebenenfalls im Gemisch mit Zusatzstoffen, versetzt oder ein Gemisch aus mindestens einem festen bioziden Wirkstoff und mindestens einem flüssigen bioziden Wirkstoff, gegebenenfalls ein Gemisch mit Zusatzstoffen zugibt, gegebenenfalls erneut mit einer wäßrigen Dispersion aus Polyurethan oder einem Gemisch aus Polyurethan und denjenigen Komponenten, die bereits im Zusammenhang mit der Beschreibung der erfindungsgemäßen Kombinationsträgergranulate vorzugsweise genannt wurden, besprüht und
- die so erhaltenen körnigen Produkte trocknet.

Die Reihenfolge, in der die Komponenten auf das Trägermaterial aufgebracht werden, kann in der jeweils gewünschten Weise variiert werden.

Das erfindungsgemäße Verfahren wird im allgemeinen bei Raumtemperatur durchgeführt. Es ist jedoch auch möglich, bei etwas erhöhter Temperatur zu arbeiten.

Die Trocknungstemperatur kann innerhalb eines größeren Bereichs variiert werden. Im allgemeinen trocknet man bei Granulat-Temperaturen zwischen 20°C und 70°C, vorzugsweise zwischen 30°C und 65°C. Die Trocknung kann gegebenenfalls unter vermindertem Druck vorgenommen werden. Ferner kann die Trocknung entweder in dem zur Beschichtung des Trägermaterials dienenden Mischer oder aber in einer separaten Trocknungsapparatur erfolgen.

Das erfindungsgemäße Verfahren kann entweder diskontinuierlich oder kontinuierlich in üblichen Apparaturen durchgeführt werden.

Die erfindungsgemäßen Kombinationsträgergranulate lassen sich je nach den enthaltenen aktiven Komponenten für die verschiedensten Zwecke einsetzen. So lassen sie sich z.B. zur Bekämpfung von tierischen Schädlingen, Pilzen und/oder Unkraut verwenden. Sind Pflanzenwachstumsregulatoren enthalten, so können sie auch zur Beeinflussung des Wachstum von Kulturpflanzen eingesetzt werden.

Die erfindungsgemäßen Kombinationsträgergranulate können nach üblichen Methoden, wie z.B. Streuen, ausgebracht werden.

Als Kleber auf Polyurethanbasis kommen vorzugsweise solche Systeme in Betracht, bei denen die eigentliche Polyurethanverbindung durch Polyaddition eines teilveresterten Glykols, symmetrischen oder unsymmetrischen Polyglykols mit Isocyanat-, Diisocyanat- oder Polyisocyanatüberschuß gebildet wird, wobei freie Isocyanatgruppen als Präpolymere erhalten bleiben.

Vorzugsweise werden Polyurethane eingesetzt, die hergestellt wurden aus einem gesättigten Polyester, gebildet aus Adipinsäure und n-Butandiol-n-hexandiol, durch Umsetzung mit linearen Iso- oder Diisocyanaten, wobei freie Isocyanatgruppen erhalten bleiben

Durch Umsetzung der dabei entstehenden Prepolymeren mit Mischungen aus Wasser und Emulgatoren kommt es zur Kettenverängerung und Bildung einer wäßrigen Dispersion.

Die Herstellung der erfindungsgemäßen Kombinations-Trägergranulate geht aus dem folgenden Beispiel hervor.

### Herstellungsbeispiel

In einem Mischer werden 250,0 kg Quarzsandkörner mit einem Durchmesser von 0,4 bis 0,8 mm unter ständigem Mischen bei 20°C mit 5,0 kg einer wäßrigen Dispersion besprüht, die 2,0 kg Polyurethan (hergestellt aus Adipinsäure und n-Butandion-n-hexandiol und Umsetzung mit Isocyanat sowie weitere Umsetzung der dabei entstehenden Prepolymeren mit Mischungen aus Wasser und Emulgatoren) enthält.

Danach werden bei Raumtemperatur 7,62 kg einer handelsüblichen, fein gemahlenen pulvrigen Mischung, die 5,72 kg an 2,3-Di-hydro-2,2-dimethyl-7-benzofuranyl-N-methyl-carbamat der Formel 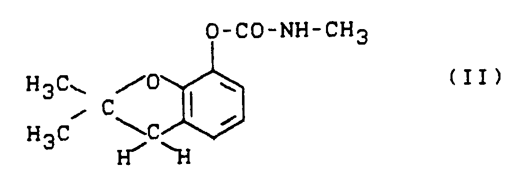
enthält, sowie 15,38 kg einer Mischung aus 8,58 kg O-Ethyl-O-(2-isopropyloxy-carbonyl-phenyl)-N-Isopropylthiono-phosphorsäureesteramid der Formel 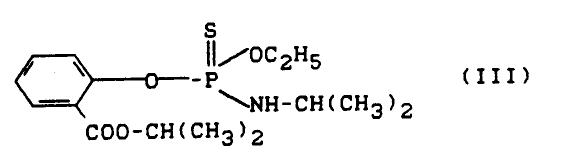
und 7,30 kg hochdisperser Kieselsäure, 1,43 kg eines blauen Farbstoffes sowie 1,43 kg Antistatika enthält, zugegeben.

Man mischt weitere 5 Minuten bei 20°C und sprüht 5,60 kg einer wäßrigen Polyvinylalkohol-Lösung, die 0,56 kg Polyvinylalkohol (Molekulargewicht: M̅_{w} 26 000) enthält, unter ständigem Mischen bei Raumtemperatur auf.

Man trocknet dann in dem Mischer bei einer Trockentemperatur von maximal 60°C und erhält auf diese Weise 286,0 kg Kombinationsträgergranulat mit einem Gehalt von 2,0 Gew.-% an Wirkstoff der Formel (II) und 3,0 Gew.-% an Wirkstoff der Formel (III).

Das Granulat zeichnet sich durch eine sehr hohe Abreibfestigkeit aus.

### Vergleichsbeispiel

### Kombinationsträgergranulat auf Basis Polyvinylacetat/Polyvinylalkohol-Kleber

In einem Mischer werden 1265,8 kg Quarzsandkörner mit einem Durchmesser von 0,4 bis 0,8 mm unter ständigem Mischen bei Raumtemperatur mit 26,0 kg einer wäßrigen Dispersion besprüht, die 6,24 kg Polyvinylacetat und 1,56 kg Polyvinylalkohol enthält. Danach werden bei Raumtemperatur 42,0 kg einer handelsüblichen, fein gemahlenen pulvrigen Mischung, die 31,5 kg an 2,3-Di-hydro-2,2-dimethyl-7-benzofuranyl-N-methyl-carbamat der Formel 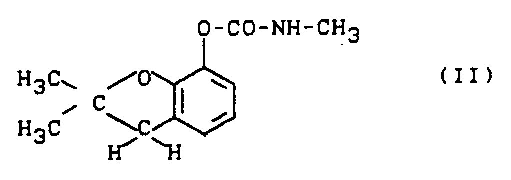
enthält, sowie eine Mischung aus 45,9 kg O-Ethyl-O-(2-isopropyloxy-carbonyl-phenyl)-N-Isopropylthiono-phosphorsäureesteramid der Formel 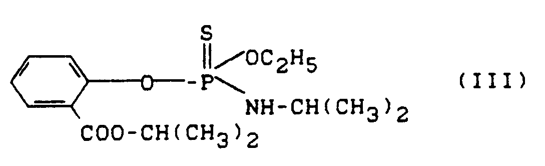
und 56,1 kg hochdisperser Kieselsäure sowie 7,2 kg blauen Farbstoffes enthält, zugegeben.

Man mischt weitere 10 Minuten bei Ramtemperatur und trocknet dann in dem Mischer bei einer Trockentemperatur von maximal 60°C. Man erhält auf diese Weise 1443,0 kg Kombinations-Trägergranulat mit einem Gehalt von 2,0 Gew.-% an Wirkstoff der Formel (II) und 3,0 Gew.-% an Wirkstoff der Formel (III).

Das erhaltene Granulat zeigte sehr starken Abrieb und Erweichung, so daß es für eine Verwendung in der Praxis nicht geeignet war.

## Patentansprüche

1. Flüssige und feste Wirkstoffe enthaltende Trägergranulate, die
a) körniges Trägermaterial mit nicht-absorptiver Oberfläche,
b) mindestens einen flüssigen neben einem festen Wirkstoff,
c) als Bindemittel mindestens einen Kleber auf Polyurethanbasis, gegebenenfalls im Gemisch mit einem weiteren Kleber auf Basis eines der folgenden Systeme:
Polyvinylacetat, Polyvinylpyrrolidon, Polyvinylalkohol, Copolymerisate aus Vinylacetat/Maleinsäure-di-n-butylester, Acrylsäureester, Vinylacetat/Ethylen, Vinylacetat/Ethylen/Vinylchlorid, Vinylacetat/Acrylsäureester, Vinylacetat/Vinylester, Styrol/Acrylsäureester sowie
d) feinkörnige anorganische Feststoffe und gegebenenfalls Zusatzstoffe enthalten.

2. Trägergranulate gemäß Anspruch 1, dadurch gekennzeichnet, daß sie einen Wirkstoff des Pflanzenschutzgebietes enthalten.

3. Trägergranulate gemäß Anspruch 1, dadurch gekennzeichnet, daß sie einen Wirkstoff der Reihe Insektizide, Nematizide, Akarizide, Fungizide, Herbizide und Wachstumsregulatoren enthalten.

4. Trägergranulate gemäß Anspruch 1 bis 3, dadurch gekennzeichnet, daß sie als Zusatzstoffe Streckmittel, Farbstoffe, Wasser, organische Solventien enthalten.

5. Trägergranulate gemäß Anspruch 4, dadurch gekennzeichnet, daß sie als Mahlhilfsmittel Kaolin, Tonerden, Talkum, Kreide oder Quarzpulver enthalten.

6. Trägergranulate gemäß Anspruch 4, dadurch gekennzeichnet, daß sie als Farbstoffe anorganische Pigmente enthalten.

7. Trägergranulate gemäß Anspruch 4, dadurch gekennzeichnet, daß sie als organische Solventien Methanol, Ethanol, Butanol oder Methylenchlorid enthalten.

8. Verfahren zur Herstellung von flüssigen und festen Wirkstoffen enthaltenden Trägergranulaten gemäß Anspruch 1, dadurch gekennzeichnet, daß man
- körniges Trägermaterial mit nicht-absorptiver Oberfläche in einem Mischer mit einer wäßrigen Dispersion eines Polyurethan-Klebers, gegebenenfalls unter Zusatz eines Verdickungsmittels und gegebenenfalls im Gemisch mit einer wäßrigen Dispersion eines weiteren Klebers auf Basis einer der folgenden Systeme:
Polyvinylacetat, Polyvinylpyrrolidon, Polyvinylalkohol, Copolymerisate aus Vinylacetat/Maleinsäure-di-n-butylester, Acrylsäureester, Vinylacetat/Ethylen, Vinylacetat/Ethylen/Vinylchlorid, Vinylacetat/Acrylsäureester, Vinylacetat/Vinylester, Styrol/Acrylsäureester
besprüht, dann mit einer den flüssigen Wirkstoff enthaltenden Vormischung und einer den festen Wirkstoff und gegebenenfalls Streckmittel enthaltenden Mischung versetzt, gegebenenfalls nochmals mit einer wäßrigen Dispersion eines Polyurethanklebers, gegebenenfalls im Gemisch mit einer wäßrigen Dispersion eines weiteren Klebers auf Basis der oben genannten Systeme besprüht und die so erhaltenen körnigen Produkte trocknet.

9. Verwendung der flüssigen und feste Wirkstoffe enthaltenden Trägergranulate gemäß Anspruch 1 bis 7 zur Bekämpfung van Schädlingen, vorzugsweise im Landwirtschafts- und Gartenbereich.

## Claims

1. Coated granules containing liquid and solid active compounds and which contain
a) a granular carrier having a non-absorptive surface,
b) at least one liquid active compound besides a solid one,
c) as the binder, at least one adhesive on a polyurethane basis, if appropriate in a mixture with another adhesive on the basis of one of the following systems:
polyvinyl acetate, polyvinylpyrrolidone, polyvinyl alcohol, vinyl acetate/di-n-butyl maleate copolymers, acrylic esters, vinyl acetate/ethylene, vinyl acetate/ethylene/vinyl chloride, vinyl acetate/acrylic esters, vinyl acetate/vinyl esters, styrene/acrylic esters, as well as
d) finely-divided inorganic solids and, if appropriate, additives.

2. Coated granules according to Claim 1, characterized in that they contain an active compound from the field of plant protection.

3. Coated granules according to Claim 1, characterized in that they contain an active compound from the series comprising insecticides, nematicides, acaricides, fungicides, herbicides and growth regulators.

4. Coated granules according to Claims 1 to 3, characterized in that they contain extenders, colorants, water and organic solvents as additives.

5. Coated granules according to Claim 4, characterized in that they contain kaolin, clays, talc, chalk or quartz powder as grinding auxiliaries.

6. Coated granules according to Claim 4, characterized in that they contain inorganic pigments as colorants.

7. Coated granules according to Claim 4, characterized in that they contain methanol, ethanol, butanol or methylene chloride as organic solvents.

8. Process for the preparation of coated granules containing liquid and solid active compounds, according to Claim 1, characterized in that
- in a mixer, a granular carrier having a non-absorptive surface is sprayed with an aqueous dispersion of a polyurethane adhesive, if appropriate with the addition of a thickener and if appropriate in a mixture with an aqueous dispersion of another adhesive on the basis of one of the following systems:
polyvinyl acetate, polyvinylpyrrolidone, polyvinyl alcohol, vinyl acetate/di-n-butyl maleate copolymers, acrylic esters, vinyl acetate/ethylene, vinyl acetate/ethylene/vinyl chloride, vinyl acetate/acrylic esters, vinyl acetate/vinyl esters and styrene/acrylic esters,
followed by the addition of a premixture containing the liquid active compound and a mixture containing the solid active compound and if appropriate extenders, this, if appropriate, being sprayed again with an aqueous dispersion of a polyurethane adhesive, if appropriate in a mixture with an aqueous dispersion of another adhesive on the basis of the abovementioned systems, and the resulting granular products are dried.

9. Use of the coated granules containing liquid and solid active compounds, according to Claims 1 to 7, for controlling pests, preferably in the fields of agriculture and gardening.

## Revendications

1. Granulés de support contenant des substances actives liquides et solides, qui contiennent
a) une matière de support granulaire à surface non absorbante,
b) au moins une substance active liquide en plus d'une substance solide,
c) comme liant, au moins un adhésif à base de polyuréthanne, éventuellement en mélange avec un adhésif supplémentaire à base d'un des systèmes ci-après :
l'acétate de polyvinyle, la polyvinylpyrrolidone, l'alcool polyvinylique, des copolymères d'acétate de vinyle/ester di-n-butylique de l'acide maléique, d'ester acrylique, d'acétate de vinyle/éthylène, d'acétate de vinyle/éthylène/chlorure de vinyle, d'acétate de vinyle/ester acrylique, d'acétate de vinyle/ester vinylique, de styrène/ester acrylique, ainsi que
d) des substances solides inorganiques à grains fins et éventuellement des additifs.

2. Granulés de support selon la revendication 1, caractérisés en ce qu'ils contiennent une substance active du domaine de la protection des plantes.

3. Granulés de support selon la revendication 1, caractérisés en ce qu'ils contiennent une substance active de la série des insecticides, des nématicides, des acaricides, des fongicides, des herbicides et des régulateurs de croissance.

4. Granulés de support selon les revendications 1 à 3, caractérisés en ce qu'ils contiennent, à titre d'additifs, des diluants, des colorants, de l'eau, des solvants organiques.

5. Granulés de support selon la revendication 4, caractérisés en ce qu'ils contiennent, à titre d'adjuvants de broyage, le kaolin, des alumines, le talc, la craie ou la poudre de quartz.

6. Granulés de support selon la revendication 4, caractérisés en ce qu'ils contiennent, à titre de colorants, des pigments inorganiques.

7. Granulés de support selon la revendication 4, caractérisés en ce qu'ils contiennent, à titre de solvants organiques, le méthanol, l'éthanol, le butanol ou le chlorure de méthylène.

8. Procédé pour la préparation de granulés de support contenant des substances actives liquides et solides selon la revendication 1, caractérisés en ce que
on asperge une matière de support granulaire à surface non absorbante dans un malaxeur à l'aide d'une dispersion aqueuse d'un adhésif de polyuréthanne, éventuellement avec addition d'un épaississant et éventuellement en mélange avec une dispersion aqueuse d'un adhésif supplémentaire à base d'un des systèmes ci-après :
l'acétate de polyvinyle, la polyvinylpyrrolidone, l'alcool polyvinylique, des copolymères d'acétate de vinyle/ester di-n-butylique de l'acide maléique, d'ester acrylique, d'acétate de vinyle/éthylène, d'acétate de vinyle/éthylène/-chlorure de vinyle, d'acétate de vinyle/ester acrylique, d'acétate de vinyle/ester vinylique, de styrène/ester acrylique,
ensuite, on ajoute un prémélange contenant la substance active liquide et un mélange contenant la substance active solide et éventuellement des diluants, on asperge éventuellement une nouvelle fois avec une dispersion aqueuse d'un adhésif de polyuréthanne, éventuellement en mélange avec une dispersion aqueuse d'un adhésif supplémentaire à base des systèmes susmentionnés et on sèche les produits granulaires ainsi obtenus.

9. Utilisation des granulés de support contenant des substances actives liquides et solides selon la revendication 1 à 7, pour lutter contre les parasites, de préférence dans le domaine de l'agriculture et des jardins.
